## Europäisches Patentamt

## European Patent Office

## Office européen des brevets

(19)

(11) Veröffentlichungsnummer: **0 142 630**
**B1**

(12) # EUROPÄISCHE PATENTSCHRIFT

(45) Veröffentlichungstag der Patentschrift:
**25.11.87**

(51) Int. Cl.⁴: **B 23 B 27/16**

(21) Anmeldenummer: **84109659.7**

(22) Anmeldetag: **14.08.84**

(54) **Vorrichtung, vorzugsweise zum Profilstechen von Stahl- und Gusseisenwalzen.**

(30) Priorität: **27.08.83 DE 3330925**

(43) Veröffentlichungstag der Anmeldung:
**29.05.85 Patentblatt 85/22**

(45) Bekanntmachung des Hinweises auf die Patenterteilung:
**25.11.87 Patentblatt 87/48**

(84) Benannte Vertragsstaaten:
**AT FR IT SE**

(56) Entgegenhaltungen:
**DE-A-1 941 982**
**DE-A-2 518 395**
**DE-A-2 553 298**
**DE-A-2 645 147**
**FR-A-2 506 642**

(73) Patentinhaber: **Gontermann- Peipers GmbH,
Postfach 10 08 42, D-5900 Siegen 1 (DE)**

(72) Erfinder: **Marquardt, Winfried Helmut,
Knopsstrasse 8, D-5900 Siegen (DE)**

(74) Vertreter: **Spalthoff, Adolf, Dipl.- Ing.,
Pelmanstrasse 31 P.O. Box 34 02 20, D-4300
Essen 1 (DE)**

EP 0 142 630 B1

**Beschreibung**

Die Erfindung betrifft eine Vorrichtung, vorzugsweise zum Profilstechen von Stahl- und Gußeisenwalzen, welche einen Stecher aufweist, an dessen einem Ende eine Schneidplatte angebracht ist, welche mitels einer am Stecher lösbar befestigten Klemmplatte gehalten ist, wobei an dem einen Ende des Stechers eine rechtwinklige Ausnehmung vorgesehen ist, in der eine Unterlagen angebracht ist, auf der die Schneidplatte aufliegt, auf deren Oberseite sich das frei vorragende.Ende der Klemmplatte abstützt, wobei die Schneidplatte zur Schneidkeilbildung geneigt angeordnet ist.

Eine derartige Vorrichtung ist bekannt durch die FR-A-2 506 642. Bei dieser bekannten Anordnung findet eine plattenartige Unterlage Verwendung, welche an ihrem rückwärtigen Ende mit einer Zahnung versehen ist, in die ein von einem Stift gehaltener, abgeplatteter Bolzen eingreift, so daß die Unterlage gegenüber dem Stecher verschwenkbar ist und damit verschiedene Winkellagen der auf der Unterlage befestigten Schneidplatte möglich sind. Die Schneidplatte selbst ist quadratisch ausgebildet.

Die bekannte Schneidplatte weist mehrere Schneidkanten auf, die nach Drehen und Wenden wirksam werden können. Diese bekannte Vorrichtung erweist sich hinsichtlich der erforderlichen Handgriffe für das Wechseln der Schneidkanten als nachteilig, da jedesmal nicht nur der Bolzen für die Klemmplatte gelöst werden muß, sondern zusätzlich ein weiterer Bolzen für den Stift zum Eingriff in das verzahnte rückwärtige Ende der Unterlage hält.

Von diesem Stand der Technik ausgehend liegt der Erfindung die Aufgabe zugrunde, unter Vermeidung vorerwähnter Nachteile eine Vorrichtung der eingangs genannten Art zu schaffen, welche nicht nur eine vielfache Wiederverwendbarkeit der Schneidplatte nach Abstumpfung einer Schneidkante derselben ermöglicht, sondern darüber hinaus auch eine erhebliche Vereinfachung der für das Montieren und Demontieren der Schneidplatte erforderlichen Arbeiten mit sich bringt.

Erfindungsgemäß wird dies dadurch erreicht, daß die Unterlage einen im wesentlichen rechtwinkligen Querschnitt aufweist, auf dessen einem Schenkel die Schneidplatte aufliegt, während der andere Schenkel der Unterlage von einem oder mehreren Bolzen durchsetzt ist, dessen eines Ende eine Abplattung aufweist bzw. deren eine Enden Abplattungen aufweisen, die sich in eine Nut an der Rückseite der Schneidplatte erstreckt bzw. erstrecken.

Durch diese Ausgestaltung wird einmal eine gute Halterung der Schneidplatte erreicht und zum anderen die Möglichkeit eines schnellen und leichten Lösens bzw. Befestigens derselben. Die sich in der Nut an der Rückseite der Schneidplatte erstreckende Abplattung des den anderen Schenkel der Unterlage durchsetzenden Bolzens dient der Arretierung sowie der Aufnahme seitlicher Kräfte. Die vorzugsweise aus Keramik bestehende Schneidplatte wird nach der Abstumpfung stets an der vorderen Schneidkante und bedingt an den Nebenschneiden nachgeschliffen. Die dadurch bedingten Änderungen der Abmessungen werden durch entsprechendes Hinterlegen zwischen Schneidplatte und Unterlage ausgeglichen. Nach Erreichen des breiten Endmaßes wird die Schneidplatte für die nächst geringere Stechbreite, z. B. 50, 44, 40, 32, 30, 25, 20 mm, umgeschliffen. Bei Ausbrüchen oder Beschädigungen besteht sogar die Möglichkeit, gleich zwei oder drei Größen nachzusetzen. Alle Formen lassen sich auf Längsschaftmeißel, Kassettenwerkzeugen und WZ-Einsätzen mit vergleichsweise geringem wirtschaftlichen Aufwand planen und anwenden.

Die Auflagefläche der Unterlage für die Schneidplatte ist von deren innerer Winkelkante zu ihrer Außenseite hin geneigt ausgeführt, wobei der Grad der Neigung der Auflagefläche vorzugsweise 4 Grad beträgt. Dieser Neigungsgrad ergibt den Schneidkeil der Schneidplatte.

Vorzugsweise beträgt der Schneidkeil der platte 4 Grad. Die Nebenschneiden sind vorzugsweise um 3 Grad freigeschliffen.

Zum Schutz gegen Abmuscheln und zur Verminderung von Kammrissen ist die Schneidplatte an ihrer Schneidkante und ggf. an ihren seitlichen Nebenschneiden angefast, vorzugsweise um 2 x mal 15 Grad.

Ein Ausführungsbeispiel der Erfindung ist an Hand der Zeichnungen näher erläutert und zwar zeigt:

Figur 1 eine geschnittene Seitenansicht des vorderen Endes eines Stechers mit montierter Schneidplatte,

Figur 2 eine Vorderansicht der Unterlage,

Figur 3 eine Seitenansicht der Figur 2,

Figur 4 eine Draufsicht der Schneidplatte,

Figur 5 eine Rückansicht der Figur 4 und

Figur 6 eine geschnittene Seitenansicht der Figur 5.

Mit 1 ist der Stecher, vorzugsweise aus Keramik, bezeichnet, an dessen einem Ende eine rechtwinklige Ausnehmung 2 vorgesehen ist. In der Ausnehmung 2 ist eine im Querschnitt im wesentlichen rechtwinklige Unterlage 3 angebracht. Auf dem einen Schenkel 4 der Unterlage 3 liegt die Schneidplatte 5 auf. Auf der Oberseite der Schneidplatte 5 stützt sich das frei vorragende Ende 6 der Klemmplatte 7 ab, die mittels des Schraubbolzens 8 an dem Stecher 1 befestigt ist.

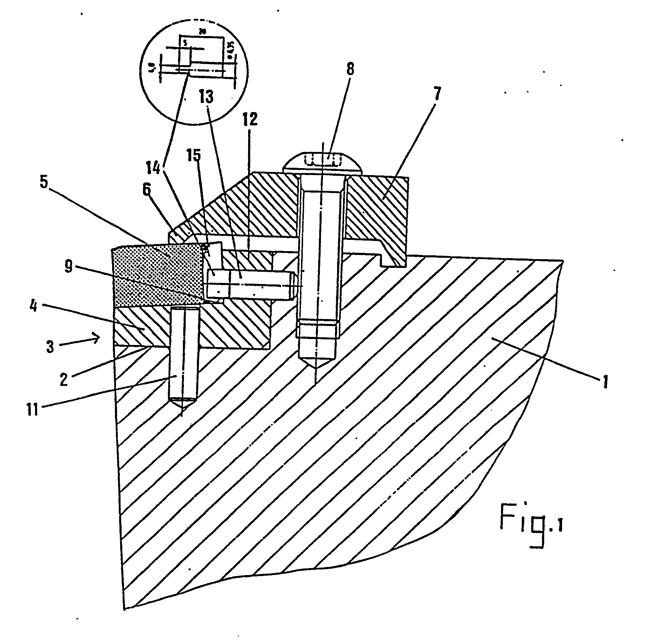

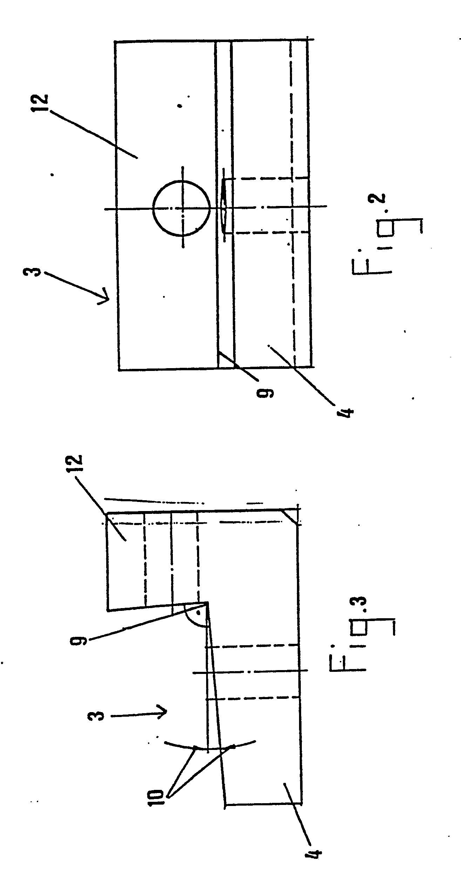

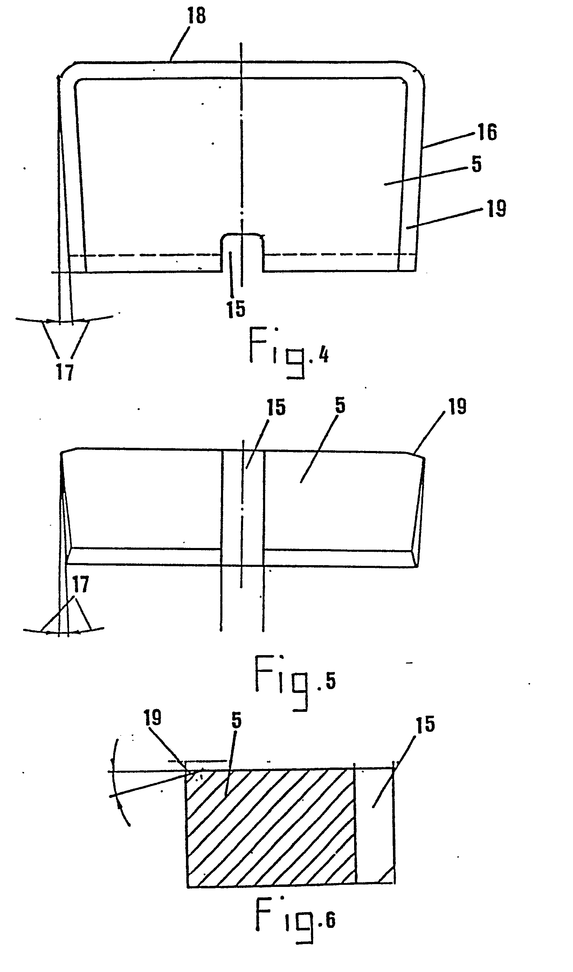

Die Auflagefläche auf dem einen Schenkel 4 der Unterlage 3 für die Schneidplatte 5 ist von deren innerer Winkelkante 9 ausgehend zu ihrer Außenseite hin geneigt ausgeführt. Dieses ergibt sich insbesondere aus Figur 3 mit dem Bezugszeichen 10 für die Winkelangabe. Die Neigung der Auflagefläche des einen Schenkels 4 beträgt 4°.

Die Unterlage 3 ist an dem Stecher 1 mittels des Bolzens 11 befestigt. Dieser durchsetzt den einen Schenkel 4 der Unterlage 3 und erstreckt sich in eine Sackbohrung des Stechers 1 hinein. Der andere Schenkel 12 der Unterlage 3 ist ebenfalls von einem Bolzen 13 durchsetzt, der in Figur 1 gesondert in einer kreisförmigen Umrahmung herausgezeichnet ist. Der Bolzen 13 erstreckt sich durch den einen Schenkel 12 der Unterlage 3 hindurch in eine Sacklochbohrung im Stecher 1. Das eine Ende dieses Bolzens 13 weist eine Abplattung 14 auf, die sich in eine nut 15 an der Rückseite der Schneidplatte 5 erstreckt und diese arretiert sowie zur Außenaufnahme seitlicher Kräfte dient.

Wie sich insbesondere aus Figur 4-6 ergibt, besitzt die Schneidplatte 5 im wesentlichen eine Rechteckform. Zur Schneidkeilbildung ist diese geneigt angeordnet, vorzugsweise unter einem Winkel von 4°, wie bei 10 in Figur 3 angegeben. Die seitlichen Nebenschneiden 16 sind freigeschliffen, vorzugsweise um einen Winkel von 3°, wie durch die Winkelangabe 17 deutlich gemacht ist.

Die Schneidplatte 5 weist an ihrer Schneidkante 18 sowie an ihren Nebenschneiden 16 eine Anfasung 19 von vorzugsweise 2 mm x 15° auf.

Die Schneidplatte 5, die im übrigen auch zum Längsdrehen Verwendung finden kann, ist nach einem Abstumpfen jeweils wieder vielfach verwendbar, da es lediglich des Nachschleifens der Schneidkante 18 und der Nebenschneiden 16 bedarf, wobei die sich ergebende Maßdifferenz durch entsprechendes Hinterlegen zwischen Schneidplatte 5 und Unterlage 3 ausgeglichen wird.

## Patentansprüche

1. Vorrichtung, vorzugsweise zum Profilstechen von Stahl- und Gußeisenwalzen, welche einen Stecher (1) aufweist, an dessen einem Ende eine Schneidplatte (5) angebracht ist, welche mittels einer am Stecher (1) lösbar befestigten Klemmplatte (7) gehalten ist, wobei an dem einen Ende des Stechers (1) eine rechtwinklige Ausnehmung (2) vorgesehen ist, in der eine Unterlage (3) angebracht ist, aus der die Schneidplatte (5) aufliegt, auf deren Oberseite sich das frei vorragende Ende (6) der Klemmplatte (7) abstützt, wobei die Schneidplatte (5) zur Schneidkeilbildung geneigt angeordnet ist, dadurch gekennzeichnet, daß die Unterlage (3) einen im wesentlichen rechtwinkligen Querschnitt aufweist, auf dessen einem Schenkel (4) die Schneidplatte (5) aufliegt, während der andere Schenkel (12) der Unterlage (3) von einem oder mehreren Bolzen (13) durchsetzt ist, dessen eines Ende eine Abplattung (14) aufweist bzw. deren eine Enden Abplattungen aufweisen, die sich in eine Nut (15) an der Rückseite der Schneidplatte (5) erstreckt bzw. erstrecken.

2. Vorrichtung nach Anspruch 1, dadurch gekennzeichnet, daß die Schneidplatte (5) zur Schneidkeilbildung um 4 Grad geneigt ist.

3. Vorrichtung nach Anspruch 1 oder 2, dadurch gekennzeichnet, daß die seitlichen Nebenscheiden (16) der Schnieidplatte um 3 Grad freigeschliffen sind.

4. Vorrichtung nach einem der vorhergehenden Ansprüche, dadurch gekennzeichnet, daß die Schneidplatte (5) an ihrer Schneidkante (18) und ggf. an ihren Nebenschneiden (16) eine Anfasung (19) besitzt.

5. Vorrichtung nach Anspruch 4 dadurch gekennzeichnet, daß die Anfasung (19) 2 mm x 15 Grad beträgt.

## Claims

1. Device, for preference for the profile cutting of steel and cast iron rolls, which is provided with a tool holder (1) at one end of which a cutting plate (5) is fitted, which is held by means of a clamp (7) which is secured to the tool holder (1) so that it can be detached, whereby at one end of the tool holder (1) a rectangular recess (2) is provided in which a support (3) is fitted, on which the cutting plate (5) rests, on the upper side of which the protruding end (6) of the clamp (7) is supported, whereby the cutting plate (5) is inclined so as to form the cutting angle, characterised in that the support (3) has a basically rectangular cross section, on one side (4) of which the cutting plate (5) rests, whilst one or several bolts (13) pass through the other side (12) of the support (3), one end of the bolt having a flat (14) or one end of the bolts having flats, which engages or engage in a groove (15) on the rear side of the cutting plate (5).

2. Device according to claim 1, characterised in that the cutting plate (5) is inclined at 4 degrees so as to form the cutting angle.

3. Device according to claim 1 or 2, characterised in that the side rakes (16) are relieved by three degrees.

4. Device according to one of the previous claims, characterised in that the cutting plate (5) is provided on its cutting edge (18) and where applicable on its side rakes (16) with a chamfer.

5. Device according to claim 4, characterised in that the chamfer (19) amounts to 2 mm x 15 degrees.

## Revendications

1. Dispositif, de préférence pour le profilage, par usinage en plongée, de cylindres en acier et de cylindres en fonte, présentant un outil travaillant en plongée (1) à une extrémité duquel est agencée une plaquette de coupe (5) qui est tenue au moyen d'une plaque de serrage (7) amoviblement fixée à l'outil travaillant en plongée (1) à l'extrémité duquel est prévu un évidement rectangulaire (2) dans lequel est agencé un support (3) sur lequel est appliquée la plaquette de coupe (5) sur la face supérieure de laquelle s'appuie l'extrémité débordante (6) de la plaque de serrage (7), la plaquette de coupe (5) étant inclinée pour former le taillant, <u>caractérisé</u> par le fait que le support (3) présente une section droite sensiblement en forme d'équerre sur une branche (4) de laquelle est appliquée la plaquette de coupe (5), tandis que l'autre branche (12) du support (3) est traversée par un ou plusieurs axes (13) doté(s) d'une extrémité méplate (14) qui s'étend dans une rainure (15) dans le côté arrière de la plaquette de coupe (5).

2. Dispositif selon revendication 1, <u>caractérisé</u> par le fait que la plaquette de coupe (5) est inclinée de 4 degrés, pour former le taillant.

3. Dispositif selon revendication 1 ou 2, <u>caractérisé</u> par le fait que les tranchants auxiliaires latéraux (16) de la plaquette sont taillés en dépouille de 3 degrés.

4. Dispositif selon l'une des revendications précédentes, <u>caractérisé</u> par le fait que la plaquette de coupe (5) possède un biseau (19) sur son tranchant (18) et, éventuellement, sur ses tranchants auxiliaires (16).

5. Dispositif selon revendication 4, <u>caractérisé</u> par le fait que le biseau (19) est de 2 mm x 15 degrés.

Fig.1

3

Fig.3

Fig.2

0 142 630

Fig.4

Fig.5

Fig.6